# EUROPEAN PATENT SPECIFICATION

(11) **EP 3 913 296 B1**
(45) Date of publication and mention of the grant of the patent: **14.08.2024**
(21) Application number: 20741738.7
(22) Date of filing: 16.01.2020
(51) Int. Cl.: G10L 15/28, F24F 11/526, F24F 1/0057, F24F 11/58, F24F 13/20, G06F 3/16, F24F 11/89, H04R 1/02, H04R 3/00

(54) **INDOOR UNIT OF AIR CONDITIONER**
INNENRAUMEINHEIT EINER KLIMAANLAGE
UNITÉ INTÉRIEURE DE CLIMATISEUR

(30) Priority: 16.01.2019 KR 20190005978
(43) Date of publication of application: 24.11.2021
(73) Proprietor: LG Electronics Inc., Seoul 07336 (KR)
(72) Inventor: JO, Jungrae, Seoul 08592 (KR); PARK, Sujun, Seoul 08592 (KR); KANG, Taeyun, Seoul 08592 (KR)
(74) Representative: Ter Meer Steinmeister & Partner
(86) International application number: PCT/KR2020/000822
(87) International publication number: WO 2020/149675

(56) References cited:
- EP-A1- 3 392 879
- KR-A- 20060 097 455
- KR-A- 20080 055 464
- KR-A- 20150 143 275
- KR-A- 20170 133 966
- KR-A- 20170 133 966
- KR-A- 20180 118 460
- US-A- 5 138 656
- US-A1- 2014 004 913
- US-A1- 2016 345 086

## Description

### BACKGROUND OF THE DISCLOSURE

### Field of the invention

The present invention relates to a voice recognition device.

### Related Art

As a conversational smart home era begins in earnest, a development of home appliances that provide interactive services through voice recognition-based artificial intelligence platforms is required.

In order to provide such an interactive service, a voice input device for recognizing a voice and a speaker for transmitting a sound should be provided in the home appliance used. US 2016/0345086 A1 relates to a portable audio input/output device comprising: a cylindrical housing having a top and a bottom; a cover coupled to the top of the cylindrical housing, the cover having multiple openings, the multiple openings extending through the cover; a microphone disposed within the housing beneath the cover; a light guide disposed within the housing and interposed between the cover and the microphone, the light guide having multiple ports that extend through the light guide and are substantially aligned with the multiple openings in the cover, the multiple ports including: a first port, aligned with the microphone, through which the microphone receives audio signals from outside the housing; and multiple false ports, acoustically insulated from the microphone; and multiple light emitting diodes (LEDs) disposed within the housing beneath the cover to emit light towards the light guide to illuminate the multiple openings in the cover.

In a case of an air conditioner for controlling a temperature of indoor air in an indoor space, positions at which a voice input device and a voice recognition device having a speaker are disposed may be changed depending on a type of an indoor unit. Since a sound is transmitted through air, there may be a problem in that an operation of the voice recognition device is not smoothly performed in a portion where air actively flows. Since the portion where the air actively flows is formed differently depending on the type of the indoor unit, the arrangement of the voice recognition device in consideration of this may be required.

In the case of a wall-mounted indoor unit installed on a wall surface of an indoor space, an intake port or a discharge port may be formed on a front surface facing the indoor space, and air flow may be actively formed in the front surface by the intake port and the discharge port. Accordingly, when a voice recognition device is not disposed without considering the structural characteristics, there may be a problem in that voice recognition or transmission with a user is not smoothly performed.

### SUMMARY

The present invention provides a voice recognition unit according to claim 1. In particular, it accurately recognizes a user's voice.

Objects of the present invention are not limited to the objects mentioned above, and other objects not mentioned will be clearly understood by those skilled in the art from the following description.

In order to achieve the above object, in an indoor unit, a voice recognition device according to claim 1 is mounted on a side surface of a cabinet. In particular, a voice input device and a speaker are disposed inside the voice recognition device. The voice input device disposed inside the voice recognition device is disposed to be inclined forward and includes a voice guide groove formed on a front surface of the voice input device.

Specifically, according to the invention, there is provided a voice recognition device according to claim 1. In particular, it includes: a base cover including a base surface and a peripheral surface extending upward in a height direction from an edge of the base surface and forming an opening portion at the other end portion of the peripheral surface; a top cover covering the opening portion of the base cover, configured to couple with the base cover to form an inner space, and including a communication hole allowing the inner space to communicate with an outside; a voice input device disposed in the inner space to receive a voice; a speaker disposed in the inner space to output a sound; and a middle cover fixedly disposed in the inner space to fix the voice input device and the speaker.

In addition, the middle cover includes a cover surface disposed in contact with an inner surface of the top cover, a voice guide portion connected to one side of the communication hole and including a voice guide groove recessed inward from the cover surface to guide a voice generated from the outside and transmitted through the communication hole to the voice input device, and a speaker mounting portion forming a speaker installation space and communicating with an outside of the top cover through the other side of the communication hole, and the cover surface disposed in contact with the inner surface of the top cover is disposed between the speaker mounting portion and the voice guide portion. Accordingly, the voice input device prevents interference by the speaker.

The voice guide portion, the cover surface, and the speaker mounting portion are sequentially disposed below the communication hole. Accordingly, a direction in which the voice input device communicates through the communication hole and a direction in which the speaker communicates through the communication hole are distinguished.

The top cover includes a first cover having an elliptical shape and disposed at a center thereof, a second cover disposed at a predetermined distance from an outer periphery of the first cover and fastened to the base cover, and a connection member connecting the first cover and the second cover to each other, and an elliptical ring-shaped communication is formed between the first cover and the second cover in the top cover.

The communication hole includes a pair of straight holes having the same length, spaced apart by a predetermined distance from each other, and formed side by side, a first curved hole connecting one end portions of each of the pair of straight holes to each other to form a curved surface, and a second curved hole connecting the other end portions of each of the pair of straight holes to form a curved surface.

The voice guide portion includes a pair of voice guide portions disposed below the pair of straight holes, a voice guide groove formed in each of the pair of voice guide portions extends in a direction of the first curved hole along each of the pair of straight holes, and the speaker mounting portion is disposed at a position at which the second curved hole is formed. Accordingly, the communication holes through which the voice guide groove and the speaker mounting portion communicate are distinguished.

The top cover has a shape protruding upward in the height direction from a center thereof, and the cover surface has a curved surface shape corresponding to the top cover. Accordingly, the middle cover can be in close contact with the top cover.

According to the invention, the voice guide portion includes an inclined surface disposed to be inclined downward from the cover surface so that the voice input device is disposed inside the inclined surface, a voice guide groove-base bent an end portion of the inclined surface to extend along the communication hole, and a voice guide groove-side surface portion bent upward in the height direction from both end portions of the voice guide groove-base and extending to the cover surface

A voice input device is mounted on an inner surface of the inclined surface, and a voice input device communication hole allowing the voice guide groove and the voice input device to communicate with each other is formed on the inclined surface. Accordingly, the voice input device disposed on the inner surface can detect an external voice through the voice guide groove and the voice input device communication hole.

The voice input device communication hole is open to form an inclination angle upward in the height direction and a direction toward which the inclined surface is directed. Accordingly, the voice input device communication hole is open in a direction opposite to the speaker mounting portion.

A voice input device communication hole is formed so that a size of the hole increases from the inner surface of the inclined surface toward an outer surface thereof. Accordingly, it is possible to extend a voice input range.

The speaker mounting portion includes a first speaker mounting portion forming a space on an outer side of the middle cover so that a portion of the speaker is disposed, and a second speaker mounting portion forming a space on an inner side of the middle cover so that other portions of the speaker are disposed.

The first speaker mounting portion includes a speaker mounting surface disposed apart downward in the height direction from the cover surface and forming a flat surface so that a portion of the speaker is mounted, a speaker insertion guide surface connecting between the speaker mounting surface and the cover surface and guiding insertion of the speaker, a speaker fixing rib formed to limit a movement of the speaker at an end portion of the speaker mounting surface, and a speaker mounting hole formed so that the speaker is inserted between the speaker mounting surface and the cover surface. Accordingly, it is possible to stably fix the speaker.

Details of other embodiments are included in the detailed description and drawings.

### ADVANTAGEOUS EFFECTS

According to the voice recognition device of the present invention, there are one or more of the following effects.

First, the voice recognition device is disposed on the side surface of the wall-mounted indoor unit in which air flow is formed less, and thus, the voice recognition device can be less affected by the air flow.

Second, the voice input device is inclined to face forward, the voice guide groove is formed in front of the voice input device, and thus, a user's voice can be recognized with high reliability.

The effects of the present invention are not limited to the above-mentioned effects, and other effects not mentioned will be clearly understood by those skilled in the art from the description and the claims.

### BRIEF DESCRIPTION OF THE DRAWINGS

FIG. 1 is a perspective view of an indoor unit of an air conditioner according to one embodiment not part of the invention.
FIG. 2 is a side view of the indoor unit of an air conditioner according to one embodiment not part of the invention.
FIG. 3 is a perspective view of a voice recognition device according to one embodiment of the present invention.
FIG. 4 is a side view of the voice recognition device according to one embodiment of the present invention.
FIG. 5 is a plan view of the voice recognition device according to one embodiment of the present invention.
FIG. 6 is a cross-sectional view for describing a state in which the voice recognition device according to one embodiment of the present invention is mounted on a side surface of a cabinet.
FIG. 7 is an exploded view of the voice recognition device according to one embodiment of the present invention.
FIG. 8 is a perspective view of a base cover according to one embodiment of the present invention.
FIG. 9 is a plan view illustrating a printed circuit board mounted on the base cover according to one embodiment of the present invention.
FIG. 10 is a cross-sectional view for describing a fastening relationship between the base cover and a top cover according to one embodiment of the present invention.
FIG. 11 is a perspective view of a middle cover according to one embodiment of the present invention.
FIG. 12 is a plan view of a state in which a speaker and a voice input device are mounted on the middle cover according to one embodiment of the present invention.
FIG. 13 is a bottom view of the state in which the speaker and the voice input device are mounted on a middle cover according to one embodiment of the present invention.
FIG. 14 is a plan view of a state in which the middle cover is mounted on the base cover according to one embodiment of the present invention.
FIG. 15 is a cross-sectional view of the middle cover for describing a voice guide groove and a voice input device communication hole according to one embodiment of the present invention.

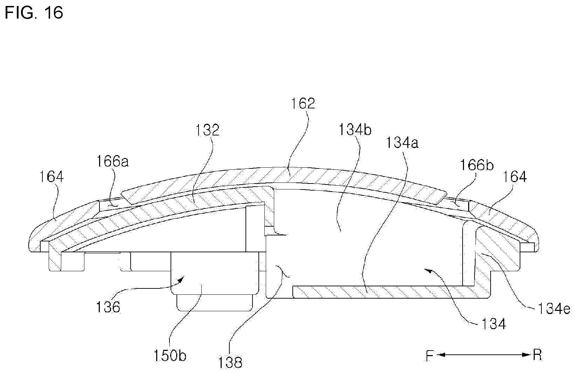

FIG. 16 is a cross-sectional view for describing an arrangement relationship of the middle cover and the top cover according to one embodiment of the present invention.
FIG. 17 is a diagram illustrating an indoor unit, a voice recognition system, and a home appliance control server of an indoor unit control system according to one embodiment not part of the present invention.
FIG. 18 is a diagram schematically illustrating the indoor unit control system according to one embodiment not part of the present invention.

### DESCRIPTION OF EXEMPLARY EMBODIMENTS

Advantages and features of the present invention and methods of achieving them will become apparent with reference to embodiments described below in detail in conjunction with the accompanying drawings. However, the present invention is not limited to the embodiments disclosed below, but can be implemented in various different forms within the scope of the claims. That is, only the present embodiments are provided to ensure that the disclosure of the present invention is complete and to completely inform those of ordinary skill in the of the scope of the invention, and the present invention is defined by the scope of claims. The same reference numerals refer to the same components throughout.

Hereinafter, embodiments not part of the invention will be described with reference to the drawings for describing an indoor unit of an air conditioner according to embodiments not part of the invention.

### <Indoor Unit of Wall-mounted Air Conditioner>

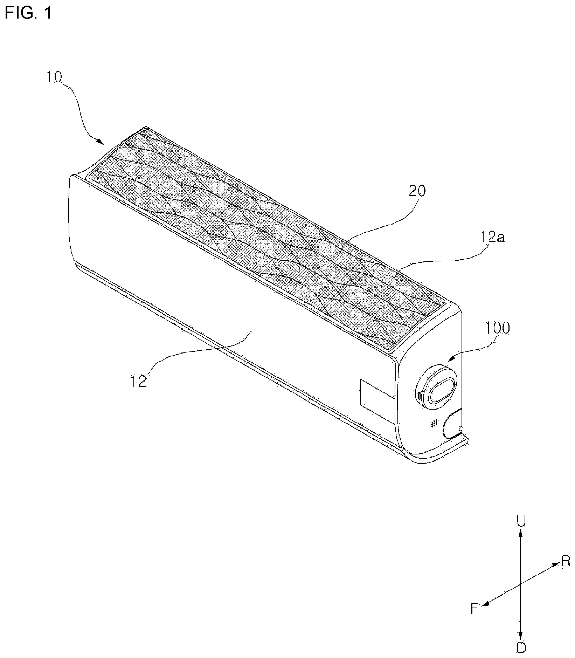

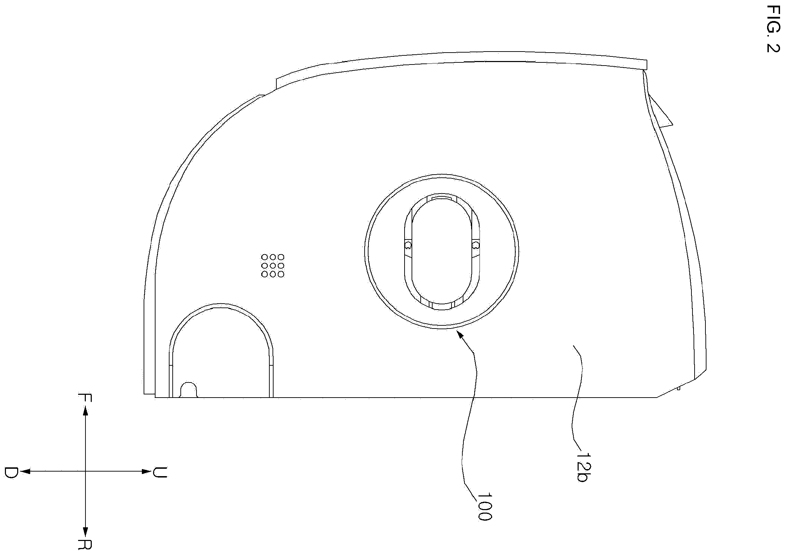

FIG. 1 is a perspective view of an indoor unit of an air conditioner according to one embodiment not part of the invention. FIG. 2 is a side view of the indoor unit of an air conditioner according to one embodiment not part of the invention.

Hereinafter, the indoor unit according to the present embodiment will be described with reference to FIGS. 1 to 2.

An indoor unit 10 according to the present embodiment may be a wall-mounted air conditioner installed on a wall surface of an indoor space.

The indoor unit 10 according to the present embodiment may include a cabinet 12 which forms an outer shape portion in which an intake port 12a and a discharge port (not illustrated) are formed, a blower fan (not illustrated) which is disposed inside the cabinet 12 and forms an air flow from the intake port 12a to the discharge port (not illustrated), and a heat exchanger (not illustrated) through which a refrigerant for heat-exchanging air flowing by the blower fan flows.

The intake port 12a according to the present embodiment is formed on an upper side of the cabinet 12. The discharge port of the indoor unit according to the present embodiment may be formed on a front surface, a lower surface, or a portion between the front surface and the lower surface of the cabinet 12.

A voice recognition device 100 for recognizing a user's voice and transmitting a sound or voice to the user may be disposed on one side of the indoor unit 10. The voice recognition device 100 according to the present embodiment may be disposed on a side surface 12b of the cabinet 12.

### <Voice Recognition Device>

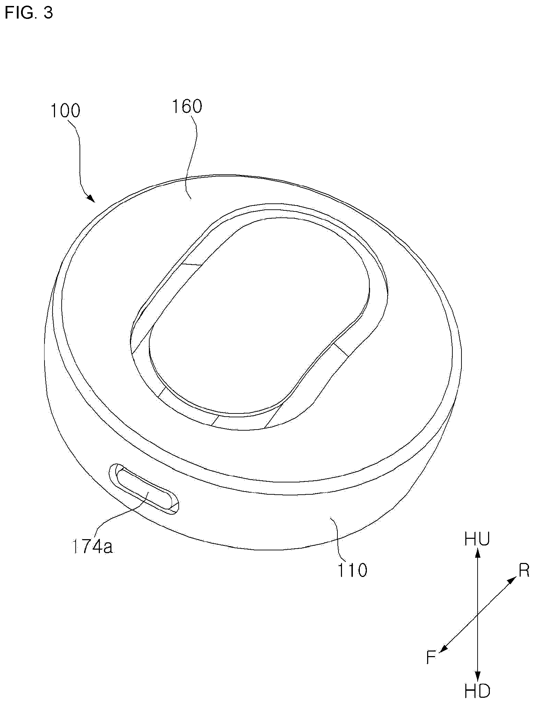

FIG. 3 is a perspective view of a voice recognition device according to one embodiment of the present invention.

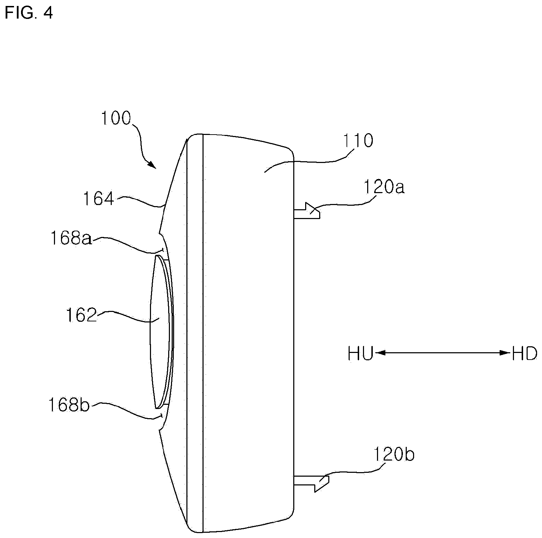

FIG. 4 is a side view of the voice recognition device according to one embodiment of the present invention.

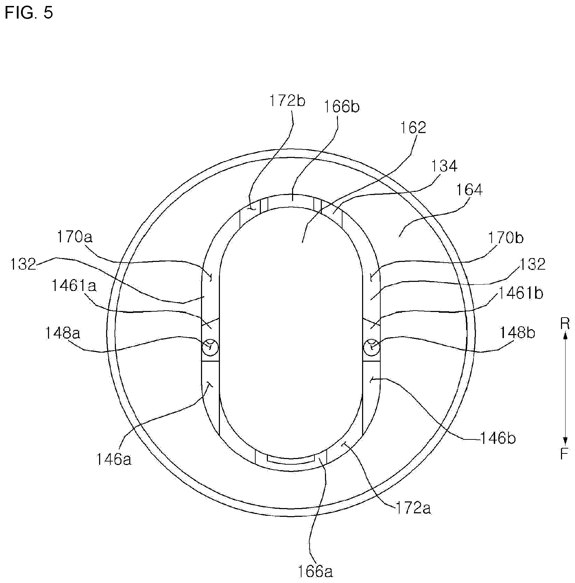

FIG. 5 is a plan view of the voice recognition device according to one embodiment of the present invention.

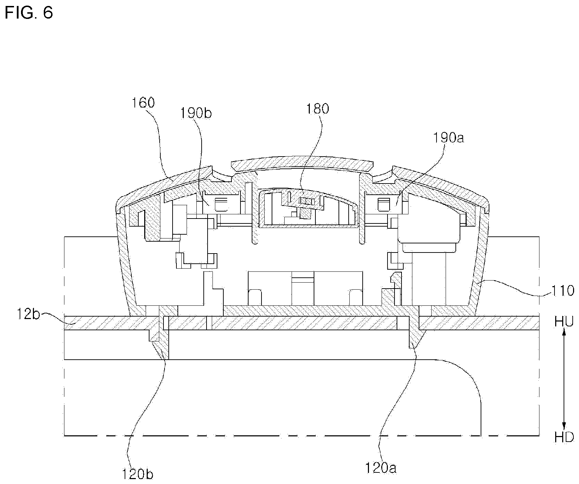

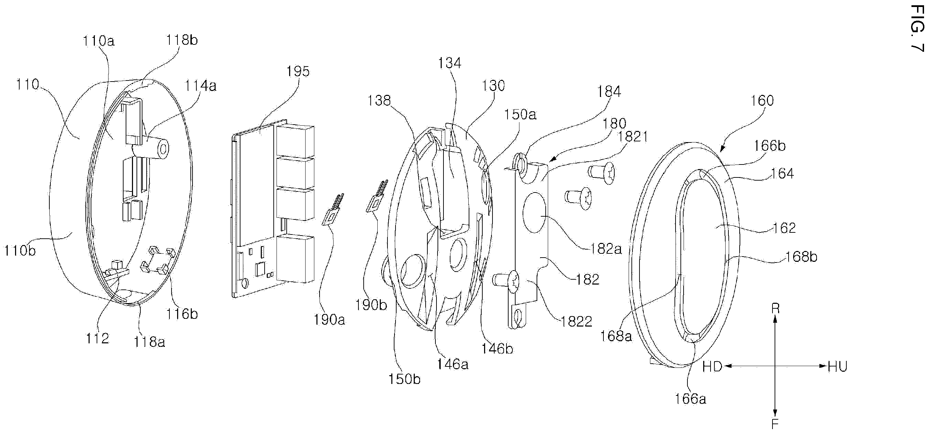

FIG. 6 is a cross-sectional view for describing a state in which the voice recognition device according to one embodiment of the present invention is mounted on a side surface of a cabinet. FIG. 7 is an exploded view of the voice recognition device according to one embodiment of the present invention.

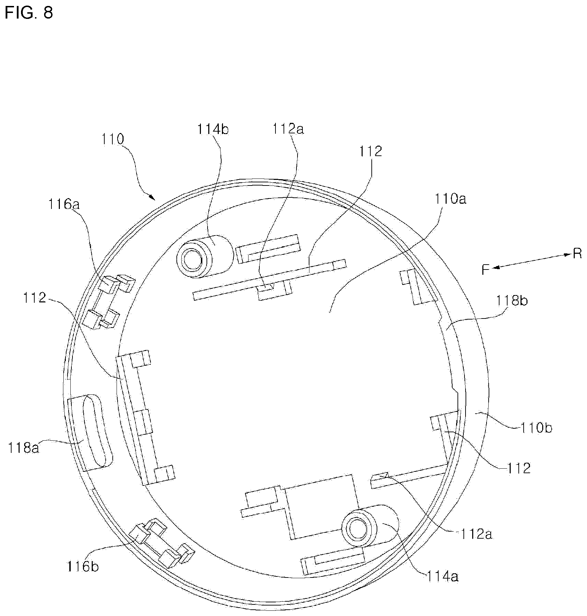

FIG. 8 is a perspective view of a base cover according to one embodiment of the present invention.

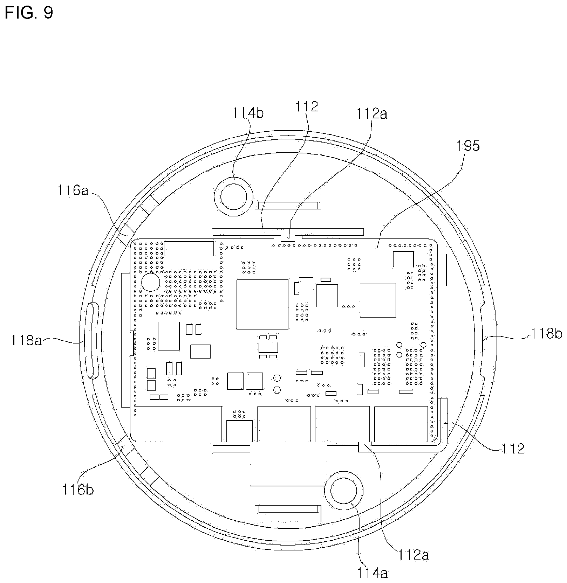

FIG. 9 is a plan view showing a printed circuit board mounted on the base cover according to one embodiment of the present invention.

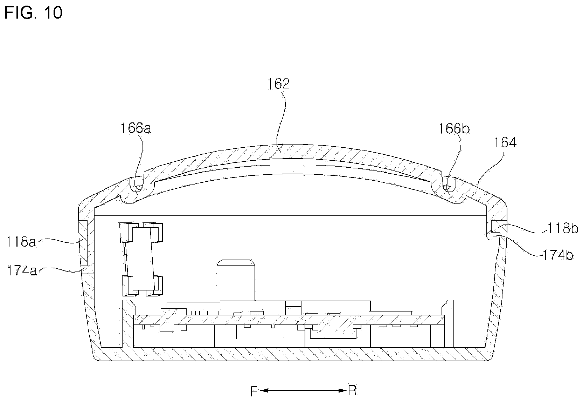

FIG. 10 is a cross-sectional view for describing a fastening relationship between the base cover and a top cover according to one embodiment of the present invention.

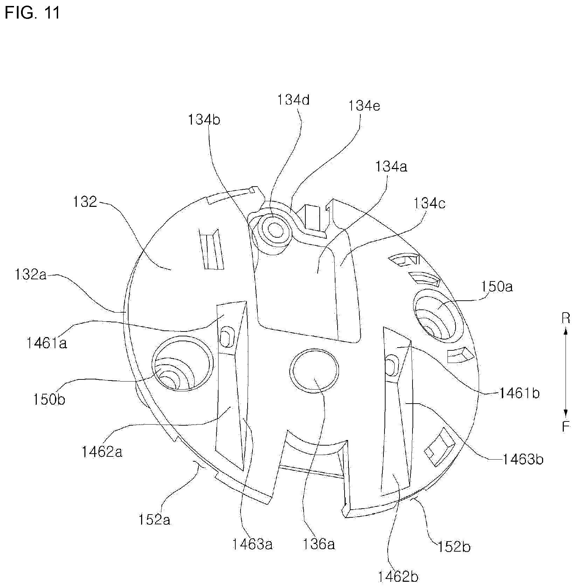

FIG. 11 is a perspective view of a middle cover according to one embodiment of the present invention.

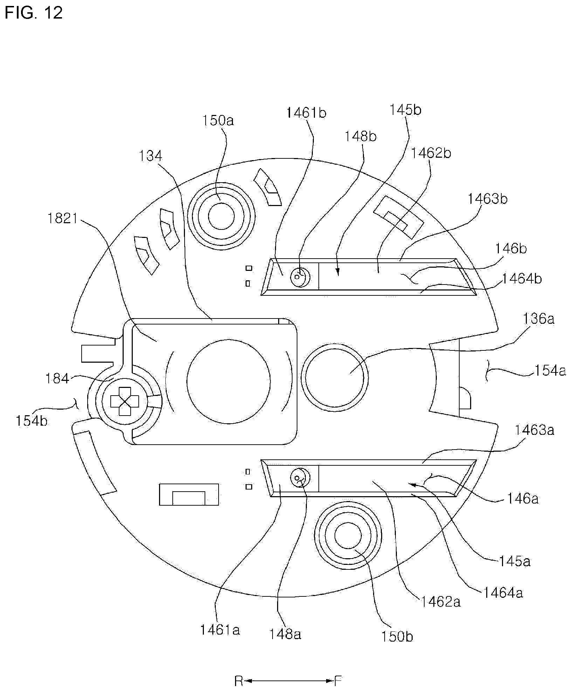

FIG. 12 is a plan view of a state in which a speaker and a voice input device are mounted on the middle cover according to one embodiment of the present invention.

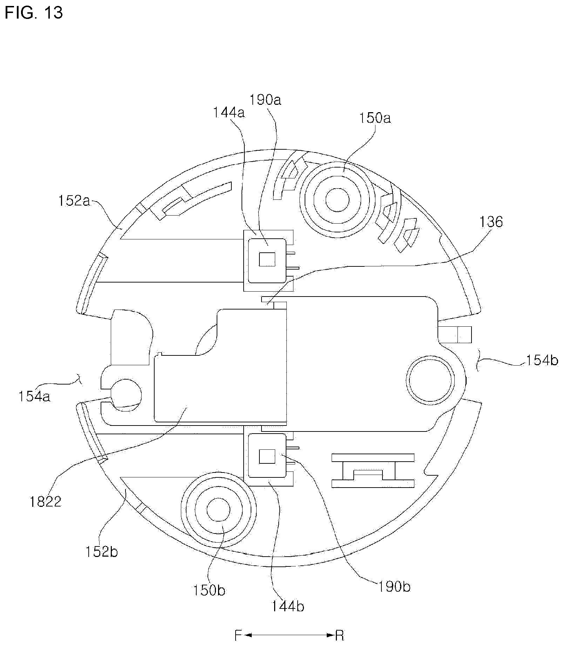

FIG. 13 is a bottom view of the state in which the speaker and the voice input device are mounted on a middle cover according to one embodiment of the present invention.

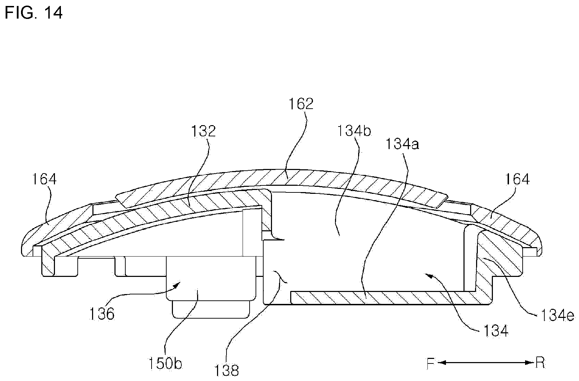

FIG. 14 is a plan view of a state in which the middle cover is mounted on the base cover according to one embodiment of the present invention.

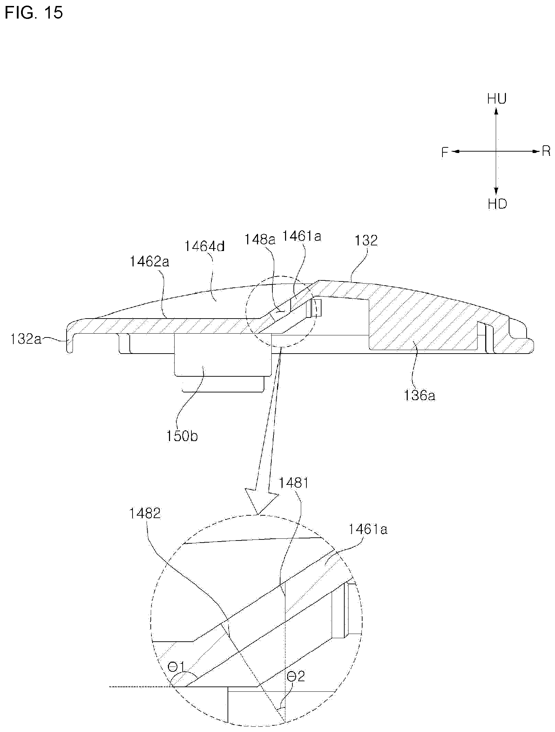

FIG. 15 is a cross-sectional view of the middle cover for describing a voice guide groove and a voice input device communication hole according to one embodiment of the present invention.

Hereinafter, a voice recognition device according to the present embodiment of the invention will be described with reference to FIGS. 3 to 15

When describing the voice recognition device 100 described below, a direction in which the base surface 110a of the base cover 110 faces outward is referred to as a lower side in height direction HD, and a direction in which a top cover 160 faces outward is referred to as an upper side in height direction HU.

A direction or surface facing an inner space formed by the base cover 110 and the top cover 160 is referred to an inner direction or an inner surface, and a direction or surface facing an outer space of the base cover 110 and the top cover 160 is referred to as an outer direction or an outer surface. A direction or surface facing an inner space formed by the base cover 110 and a middle cover 130 is referred to as an inner direction or an inner surface, and a direction or surface facing an outer space of the base cover 110 and the middle cover 130 is referred to an outer direction or an outer surface

In addition, front (F), rear (R), upper (U) and lower (D) direction indications are described with reference to front (F), rear (R), upper (U), and lower (D) directions of the cabinet 12. That is, the front (F), rear (R), upper (U), and lower (D) may be classified based on when the voice recognition device 100 is mounted on the cabinet 12.

The voice recognition device 100 according to the present embodiment may implement an interface with a user through a voice or sound. The voice recognition device 100 may be disposed on the side surface of the indoor unit 10. The voice recognition device 100 according to the present embodiment is disposed on the side surface of the cabinet 12 of the indoor unit 10 installed on the wall surface of the indoor space.

The voice recognition device 100 according to the present embodiment includes housings 110 and 160 which form an outer shape, a voice input device 190 which is disposed inside the housings 110 and 160 and receives a user's voice, a speaker 180 which informs a user of operation state or processing information of the indoor unit 10 or outputs a voice corresponding to a voice recognition result, a printed circuit board 195 which converts an audio signal received by the voice input device 190 into an electric signal or processes a signal to be output from the speaker 180, and a middle cover 130 which fixes the speaker 180 and the voice input device 190 inside the housings 110 and 160.

A reception hole (not illustrated) for receiving a voice is formed on one side of the voice input device 190. The reception holes may be disposed at positions corresponding to the voice input device communication holes 148a and 148b formed in inclined surfaces 1461a and 1461b of voice guide grooves 146a and 146b to be described below.

The voice input device 190 may include a plurality of voice input devices 190 to more accurately receive a user's voice command, and the plurality of voice input devices 190 may be disposed at different positions.

The voice input device 190 according to the present embodiment includes two voice input devices 190 to secure voice recognition performance. The two voice input devices 190 is disposed to be spaced apart from each other by a predetermined distance. A noise may be removed by comparing the voices input from the two voice input devices 190 spaced apart from each other by a predetermined distance.

The voice input device 190 according to the present embodiment is disposed on an inner surface of the middle cover 130 described below. In the middle cover 130 according to the present embodiment, the voice input device communication holes 148a and 148b are formed in a portion where the voice input device 190 is disposed. That is, in the middle cover 130 according to the present embodiment, two voice input device communication holes 148a and 148b are formed in the portions where the two voice input devices 190 are disposed.

The voice input device communication holes 148a and 148b formed in the middle cover 130 are formed at positions corresponding to communication holes 168a and 168b formed in the top cover 160 described below. Accordingly, a voice of an external user can be transmitted to the voice input device 190 through the communication holes 168a and 168b of the top cover 160 and the voice input device communication holes 148a and 148b of the middle cover 130.

The voice input device 190 may be mounted on the middle cover 130 through a separate adhesive member (not illustrated).

The speaker 180 according to the present embodiment includes a speaker body 182 which forms an external shape of the speaker 180 and has a speaker opening portion 182a opened to output a sound in one direction, an output unit (not illustrated) which outputs a sound to the speaker opening portion 182a formed one side of the speaker body 182, and a speaker fastening unit 184 formed to fasten the speaker body 182 to the middle cover 130. The speaker fastening unit 184 is fastened to a speaker fastening member 134d formed in the middle cover 130.

The speaker body 182 includes a first speaker body 1821 disposed to face an outer direction of the middle cover 130 and a second speaker body 1822 disposed to face an inner direction of the middle cover 130 when the speaker 180 is mounted on the middle cover 130. The speaker opening portion 182a is formed in the first speaker body 1821 and is disposed to face the outer direction of the middle cover 130.

The housings 110 and 160 may include cabinet fastening hooks 120a and 120b for mounting to the side surface 12b of the cabinet 12. In the housings 110 and 160, the communication holes 168a and 168b open to transmit the sound generated by the speaker 180 to the outside may be formed. In the housings 110 and 160, the communication holes 168a and 168b open to transmit the user's voice to the voice input device 190 may be formed. The communication holes 168a and 168b formed in the housings 110 and 160 may transmit a sound generated by the speaker 180 to the outside or a user's voice to the voice input device 190.

The housings 110 and 160 form a space in which the printed circuit board 195, the speaker 180, and the voice input device 190 are disposed.

The housings 110 and 160 include a base cover which is mounted on the side surface 12b of the cabinet 12, forms a space in which a component such as the printed circuit board 195 is disposed, and has one open side, and a top cover 60 which covers the one open side of the base cover 110 and has the communication holes 168a and 168b through which a sound generated by the speaker 180 is transmitted to the outside or the user's voice is transmitted to the voice input device 190.

The base cover 110 may be mounted on the side surface 12b of the cabinet 12. The base cover 110 may have a flat cylindrical shape with the one open side.

The base cover 110 includes a printed circuit board fixing rib 112 on which the printed circuit board 195 is mounted, middle cover fastening portion 114a and 114b to which the middle cover 130 is fastened, erroneous assembly prevention structures 116a and 116b which fixes a direction in which the middle cover 130 is mounted on the base cover 110, and top cover fastening portions 118a and 118b which are fastened to the top cover 160.

The printed circuit board fixing rib 112 may be formed on the inner surface of the base cover 110 to fix the printed circuit board 195 inside the base cover 110. The middle cover fastening portions 114a and 114b may fasten the middle cover 130 to the base cover 110 through a separate fastening member (not illustrated).

The erroneous assembly prevention structures 116a and 116b are formed on an inner peripheral surface of the base cover 110 to determine a direction in which the middle cover 130 is inserted into the base cover 110. Two erroneous assembly prevention structures 116a and 116b according to the present embodiment may be disposed on an inner peripheral surface of the base cover 110. The two erroneous assembly prevention structures 116a and 116b disposed on the inner peripheral surface of the base cover 110 are not formed on surfaces facing each other.

The top cover fastening portions 118a and 118b may be engaged with and fastened to base cover fastening portions 174a and 174b formed on the top cover 160. A fastening groove may be formed in one of each of the top cover fastening portions 118a and 118b and each of the base cover fastening portions 174a and 174b, a fastening hook may be formed in the other one, and thus, the top cover fastening portions 118a and 118b and the base cover fastening portions 174a and 174b can be fastened in such a way that they engage with each other. In the present embodiment, the fastening grooves are formed in the top cover fastening portions 118a and 118b, and the corresponding fastening protrusions are formed in the base cover fastening portions 174a and 174b.

The base cover 110 may include the base surface 110a which comes into contact with the cabinet 12 when the base cover 110 is mounted on the cabinet 12, and a peripheral surface 110b which is bent at an end portion forming an edge of the base surface 110a and extends in the open one direction.

The base surface 110a may have a substantially circular shape. The peripheral surface 110b is connected to the base surface 110a at one end portion. An opening portion of the base cover 110 is formed at the other end of the peripheral surface 110b. The peripheral surface 110b may be formed to gradually move away from a center of the base cover as it goes from the base surface 110a in the direction of the opening portion.

The cabinet fastening hooks 120a and 120b formed to be fastened to the cabinet 12 may be disposed on the outside of the base surface 110a. A pair of cabinet fastening hooks 120a and 120b may protrude outward from the base surface 110a.

The printed circuit board fixing rib 112 on which the printed circuit board 195 is mounted is formed on the inner side of the base surface 110a. The printed circuit board fixing rib 112 may form a space into which the printed circuit board 195 is inserted, and may have a shape surrounding the printed circuit board 195. In addition, a fixing protrusion 112a for fixing the mounted printed circuit board 195 may be formed at an end portion of the printed circuit board fixing rib 112.

The middle cover fastening portions 114a and 114b may be formed on the inner side of the base surface 110a.

At least two erroneous assembly prevention structures 116a and 116b are formed on the inner side of the peripheral surface 110b. The top cover fastening portions 118a and 118b are formed on the peripheral surface 110b of the base cover 110 according to the present embodiment.

The top cover 160 covers the opened upper side in height direction HU of the base cover 110. The top cover 160 has a schematically circular shape, and forms a curved surface convex toward the upper side in height direction HU. The top cover 160 may have a convex shape from the center of the top cover 160 to the upper side in the height direction HU. Accordingly, the top cover 160 is positioned on the lower side in height direction HD as it gets farther from the center, and may be formed in a curved surface as a whole.

The communication holes 168a and 168b are formed in the top cover 160 to transmit the sound generated by the speaker 180 to the outside or the user's voice to the voice input device 190.

The communication holes 168a and 168b include a pair of straight holes 170a and 170b which are formed side by side spaced apart by a predetermined distance by the same length, and a pair of curved holes 172a and 172b which connects both ends of the pair of straight holes 170a and 170b to each other to form curved surfaces.

When the voice recognition device 100 is mounted on the cabinet 12, each of the pair of straight holes 170a and 170b may be formed to be long in a front-rear direction. The straight holes 170a and 170b may be formed on the upper side in height direction HU of a portion where the voice input device 190 described below is disposed. The straight holes 170a and 170b may be formed on the upper side in height direction HU of the voice guide grooves 146a and 146b formed in the middle cover 130 described below.

The straight holes 170a and 170b are disposed on the upper side in height direction HU of the voice guide grooves 146a and 146b formed in the middle cover 130 at the front thereof, and are disposed on the upper side in height direction HU of the cover surface 132 of the middle cover 130 at the rear thereof.

When the voice recognition device 100 is mounted on the cabinet 12, the pair of curved holes 172a and 172b may be disposed toward the front and rear. Connection members 166a and 166b may be disposed in portions where the pair of curved holes 172a and 172b is formed.

The curved holes 172a and 172b are a first curved hole 172a formed on a front (F) side of the voice recognition device 100 and a second curved hole 172b formed on a rear (R) side of the voice recognition device 100.

The first curved hole 172a extends from front end portions of the pair of straight holes 170a and 170b, and the first curved hole 172a is disposed on the upper side in height direction HU of the voice guide grooves 146a and 146b in the portions connected to the straight holes 170a and 170b. However, the first curved hole 172a is disposed on the upper side in height direction HU of the cover surface 132 of the middle cover 130 toward the front end portion.

The second curved hole 172b extends from rear end portions of the pair of straight holes 170a and 170b, and the second curved hole 172b is disposed on the upper side in height direction HU of the cover surface 132 of the middle cover 130 in the portions connected to the straight holes 170a and 170b. Moreover, the second curved hole 172b is disposed on the upper side of a first speaker mounting portion 134 toward the rear end portion. Accordingly, the sound generated by the speaker 180 may be transmitted to the outside through the second curved hole 172b. Referring to FIG. 5, the voice guide portions 145a and 145b, the cover surface 132, and the speaker mounting portion 134 are sequentially disposed below the communication holes 168a and 168b.

The top cover 160 includes a first cover 162 which has an elliptical shape and is disposed at a center thereof, a second cover 164 which is spaced apart by a predetermined distance from an outer periphery of the first cover 162 and fastened to the base cover 110, the connection members 166a and 166b which connect the first cover 162 and the second cover 164 to each other, and the communication holes 168a and 168b which are formed between the first cover 162 and the second cover 164. The connection members 166a and 166b may be disposed at the front end portion and the rear end portion of the first cover 162 to connect the first cover 162 and the second cover 164 to each other.

The middle cover 130 is disposed in the inner space formed by the top cover 160 and the base cover 110, and fixes the speaker 180 and the voice input device 190. The middle cover 130 may be fixed to the base cover 110 through a separate fastening member (not illustrated).

The outer surface of the middle cover 130 may be disposed to be partially in contact with the inner surface of the top cover 160. The middle cover 130 may have a substantially disk shape, and may form a curved surface of which a center is convex toward the upper side in height direction HU. The curved surface formed by the middle cover 130 may be formed to correspond to the curved surface formed by the top cover 160. Accordingly, when the middle cover 130 is disposed inside the top cover 160, the outer surface of the middle cover 130 is disposed in contact with the inner surface of the top cover 160. That is, by minimizing a spatial structure formed around the voice guide grooves 146a and 146b described below, noise generated in a surrounding spatial structure of the voice input device 190 can be minimized.

The middle cover 130 includes speaker mounting portions 134 and 136 to which the speaker 180 is mounted and fixed, voice input device mounting portions 144a and 144b on which the voice input device 190 is mounted, and the voice guide grooves 146a and 146b which guide a voice generated by the user to the voice input device 190. The middle cover 130 includes the voice guide portions 145a and 145b including the voice guide grooves 146a and 146b concave inward from the cover surface 132 to guide a voice generated from the outside to the voice input device through the communication holes 168a and 168b.

The middle cover 130 includes a cover surface 132 having a curved surface shape corresponding to the top cover 160, and an edge portion 132a bent downward in the height direction at an edge portion of the cover surface 132.

The speaker mounting portions 134 and 136 have a structure in which the speaker 180 is inserted from the inner surface of the middle cover 130 toward the outer surface. The speaker mounting portions 134 and 136 form a concave groove in the cover surface 132 and include a speaker mounting hole 138 into which the speaker 180 is inserted.

The speaker mounting portions 134 and 136 include a first speaker mounting portion 134 on which a first speaker body 1821 is mounted, and a second speaker mounting portion 136 on which a second speaker body 1822 is mounted. The first speaker mounting portion 134 is disposed on the rear side of the middle cover 130, and the second speaker mounting portion 136 is disposed on the front side of the middle cover 130.

The first speaker mounting portion 134 includes a speaker mounting surface 134a which is disposed to be spaced apart toward a lower side in height direction HD from the cover surface 132 and forms a flat surface on which a portion of the speaker 180 is mounted, speaker insertion guide surfaces 134b and 134c which connect between the speaker mounting surface 134a and the cover surface 132 and guides the insertion of the speaker 180, a speaker fixing rib 134e which is formed to limit a movement of the speaker 180 at an end portion of the speaker mounting portion 134a, and a speaker mounting hole 138 into which the speaker 180 is inserted between the speaker mounting surface 134a and the cover surface 132. The first speaker mounting portion 134 may further include a speaker fastening member 134d formed to fasten the speaker 180 to the middle cover 130 as a separate fastening member (not illustrated). The speaker fastening member 134d is formed at an end portion of the first speaker mounting portion 134.

The speaker mounting surface 134a and the speaker insertion guide surfaces 134b and 134c may form a groove in which the first speaker body 1821 is disposed.

The second speaker mounting portion 136 may form a curved surface corresponding to the curved surface formed by the top cover 160 and may be in contact with the top cover 160. The second speaker mounting portion 136 may be disposed between the pair of voice input device communication holes 148a and 148b described below. The second speaker mounting portion 136 includes a speaker fixing protrusion 136a for fixing the second speaker body 1822 disposed inward. The speaker fixing protrusion 136a may protrude inward from the inner surface of the cover surface 132 and come into contact with one side of the second speaker body 1822.

When the speaker 180 is mounted on the middle cover 130, a portion of the speaker 180 may be disposed on the outer surface of the middle cover 130, and the remaining portion thereof may be disposed on the inner surface of the middle cover 130. When the speaker 180 is mounted on the middle cover 130, the first speaker body 1821 is disposed on the outer surface of the middle cover 130, and the second speaker body 1822 is disposed on the inner surface of the middle cover 130.

The voice input device mounting portions 144a and 144b include two voice input device mounting portions 144a and 144b in which two voice input devices 190 spaced apart by a predetermined distance are disposed. The two voice input device mounting portions 144a and 144b are spaced apart from each other by a predetermined distance.

The voice input device mounting portions 144a and 144b are formed on the inner surface of the middle cover 130. That is, the voice input device 190 is mounted on the inner surface of the middle cover 130. The voice input device 190 is attached to the middle cover 130 with a separate fastening member (not illustrated) capable of bonding the voice input device 190 to the middle cover 130. When the voice input device 190 is mounted on the voice input device mounting portions 144a and 144b, the voice input device 190 is inclined toward the front F. When the voice input device 190 is mounted on the voice input device mounting portions 144a and 144b, a reception hole formed in the voice input device 190 is inclined toward the front F. The voice input device mounting portions 144a and 144b may be formed on inner surfaces of inclined surfaces 1461a and 1461b described below.

The voice guide grooves 146a and 146b according to the present embodiment include two voice guide grooves 146a and 146b formed at a portion in which the two voice input devices 190a and 190b spaced apart from each other are disposed.

The cover surface 132 of the middle cover 130 disposed in contact with the inner surface of the top cover 160 is formed between the two voice guide grooves 146a and 146b. The voice guide grooves 146a and 146b are formed between the inner surface of the top cover 160 and the cover surface 132 of the middle cover 130 disposed in contact with the inner surface. The cover surface 132 of the middle cover 130 disposed in contact with the inner surface of the top cover 160 is disposed around the voice guide grooves 146a and 146b. The second speaker mounting portion 136 in which the second speaker body 1821 is disposed may be formed on the inner surface of the cover surface 132 disposed between the two voice guide grooves 146a and 146b.

The voice guide grooves 146a and 146b form grooves concave inwardly from the cover surface 132. The voice guide grooves 146a and 146b are connected to the communication holes 168a and 168b formed in the top cover 160 to communicate with the outside. The voice guide portions 145a and 145b include inclined surface 1461a and 1461b which are disposed to be inclined forward, voice guide groove-bases 1462a and 1462b which are bent at end portions of the inclined surfaces 1461a and 1461b to extend forward, and voice guide groove-side surface portions 1463a, 1463b, 1464a, and 1464b which extend the upper side in height direction HU from both end portions of the voice guide groove-bases 1462a and 1462b.

The inclined surfaces 1461a and 1461b form an inclination angle θ1 with the voice guide groove-bases 1462a and 1462b. The inclination angle θ1 formed by the inclined surfaces 1461a and 1461b and the voice guide groove-bases 1462a and 1462b may be in a range of 120° to 160°. The inclined surfaces 1461a and 1461b may be inclined toward the front F. The voice input device mounting portions 144a and 144b on which the voice input device 190 are mounted may be formed on the inner surfaces of the inclined surfaces 1461a and 1461b. In the inclined surfaces 1461a and 1461b, voice input device communication holes 148a and 148b are formed through which externally generated voice is transmitted to the voice input device 190 mounted on the inner surface of the inclined surfaces 1461a and 1461b

Since the voice input device 190 is mounted on the inner surfaces of the inclined surfaces 1461a and 1461b having a predetermined angle of inclination θ1 from the voice guide groove-bases 1462a and 1462b, a voice recognition rate of a user who generates a voice command in front of the indoor unit 10 may be increased to 90% or more.

The cover surface 132 is disposed behind the inclined surfaces 1461a and 1461b. Accordingly, the communication holes 168a and 168b formed above the voice guide grooves 146a and 146b may be disposed above the cover surface 132 from the rear of the inclined surfaces 1461a and 1461b.

The voice input device communication holes 148a and 148b are opened while forming an inclination angle θ2 toward the upper side in height direction HU and the front F direction. That is, the voice input device communication holes 148a and 148b are formed so that sizes of the holes increase from the inner surfaces to the outer surfaces of the inclined surfaces 1461a and 1461b. A rear end portion 1481 of the voice input device communication holes 148a and 148b may extend to the upper side in height direction HU. A front end portion 1482 of the voice input device communication holes 148a and 148b may extend while forming the inclination angle θ2 from the upper side in height direction HU to the front F. That is, the inclination angle θ2 formed by the front end portion 1482 of the voice input device communication holes 148a and 148b and the rear end portion 1481 of the voice input device communication holes 148a and 148b may be in the range of 30° to 40°. Since the voice input device communication holes 148a and 148b formed on the inclined surfaces 1461a and 1461b having a predetermined inclination angle θ1 are formed to be widened in the forward direction, the voice recognition rate of the user who generates a voice command from the front of the indoor unit 10 may further increase.

The voice guide groove-bases 1462a and 1462b are bent on the inclined surfaces 1461a and 1461b and extend in the forward direction F. The voice guide groove-side surface portions 1463a, 1463b, 1464a, and 1464b extend from both ends of the voice guide groove-bases 1462a and 1462b to the portion where the cover surface 132 is formed. The voice guide groove-bases 1462a and 1462b and the voice guide groove-side surface portions 1463a, 1463b, 1464a, and 1464b extend forward of the inclined surfaces 1461a and 1461b, and can guide the voice generated from the outside to the voice input device communication holes 148a and 148b formed in the inclined surfaces 1461a and 1461b

The middle cover 130 may have through holes 154a and 154b through which the base cover fastening portions 174a and 174b of the top cover 160 pass.

### <Usage of Indoor Unit>

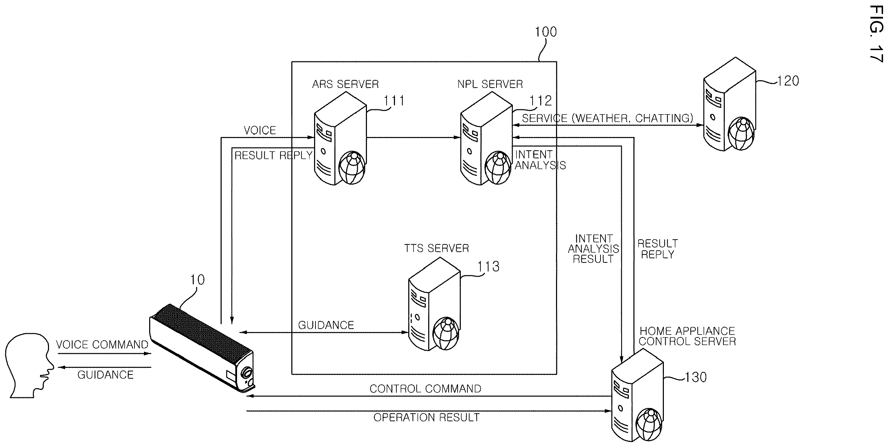

FIG. 17 is a diagram illustrating an indoor unit, a voice recognition system, and a home appliance control server of an indoor unit control system according to one embodiment not part of the present invention.

Hereinafter, an indoor unit control system capable of conducting a voice conversation with a user using an indoor unit including a microphone assembly and a voice recognition device according to the present embodiment will be described with reference to FIG. 17.

As illustrated in FIG. 17, the indoor unit control system may include the indoor unit 10, a voice recognition system 200, and a home appliance control server 230, and further include a service server 220 providing required services.

The voice recognition system 200 includes the voice recognition system 200 which receives voice data from the indoor unit 10, analyzes the voice data, and determines a voice command accordingly.

The voice recognition system 200 may receive voice data from the indoor unit 10, convert the received voice data into text data, and analyze the text data to determine the voice command. Moreover, the voice recognition system 200 may transmit a signal corresponding to the determined voice command to the home appliance control server 230 or the service server 220.

The home appliance control server 230 transmits a control signal based on the received request signal to the indoor unit 10. The service server 220 determines the service corresponding to the request signal and transmits the service data.

The voice recognition system 200 may include an automatic speech recognition (ASR) server 211, a natural language processing (NLP) server 212, and a text-to-speech (TTS) server 213.

In addition, the voice recognition system 200 may further include a linked service server (not illustrated) which generates the request signal corresponding to the voice command and transmits the request signal to the home appliance control server 230 or the service server 220.

Each of the automatic speech recognition server 211, the natural language processing server 212, and the text-to-speech conversion server 213 of the voice recognition system 200 may be configured as one or a plurality of servers, as illustrated. In addition, the automatic speech recognition server 211, the natural language processing server 212, and the text-to-speech conversion server 213 of the voice recognition system 200 may form one voice server.

The automatic voice recognition server 211 receives voice data from the indoor unit 10 and converts the received voice data into text data.

The automatic voice recognition server 211 may perform voice recognition on the voice data received from the indoor unit 10 to generate text data and transmit the text data to the natural language processing server 212.

The natural language processing server 212 receives text data from the automatic speech recognition server 211, analyzes the received text data to determine a voice command, and transmits a response signal based on the determined voice command to the indoor unit 10.

The natural language processing server 212 may determine the voice command by analyzing the text data received from the automatic voice recognition server 211 according to a natural language processing algorithm.

The natural language processing server 212 may process a natural language, which is a language that humans use daily, according to a natural language processing algorithm, and thus, may analyze a user's intent. The natural language processing server 212 may perform natural language processing on the text data received from the automatic speech recognition server 211 to determine a voice command that meets the user's intention.

The natural language processing server 212 may determine a voice command that matches the user's intention even when the user inputs the voice command in a language used in daily life.

The natural language processing server 212 may transmit a signal corresponding to the natural language processing result, that is, a signal corresponding to the determined voice command to the home appliance control server 230 or the service server 220.

When the determined voice command is related to the indoor unit 10, the natural language processing server 212 communicates with the home appliance control server 230 to perform a corresponding operation, and when the determined voice command is not related to the home appliance including the indoor unit 10, the natural language processing server 212 may communicate with the external service server 220 to perform a corresponding operation.

The natural language processing server 212 determines whether the voice command determined based on state information of the indoor unit 10 can be supported, and may transmit a request signal corresponding to the voice command determined by the home appliance control server 230, or may transmit a signal indicating that the function is not supported.

The text-to-speech server 213 receives a signal including text corresponding to the response signal from the indoor unit 10, converts the text included in the received signal into voice data, and transmits the converted voice data to the indoor unit 10.

The indoor unit 10 may receive a voice command input uttered by a user and transmit voice data based on the received voice command input to the voice recognition system 200.

The home appliance control server 230 may transmit a control signal based on the received request signal to the indoor unit 10.

For example, when a request for changing the set temperature of the indoor unit 10 is received, the home appliance control server 230 may transmit a control signal for changing the set temperature to the indoor unit 10.

Meanwhile, the indoor unit 10 may perform a corresponding operation according to a control signal received from the home appliance control server 230.

In addition, the indoor unit 10 may perform the requested operation and then transmit a signal indicating that the operation has been performed to the home appliance control server 230.

Moreover, the home appliance control server 230 may receive a response signal to the control signal from the indoor unit 10 and transmit processing result information corresponding to the response signal.

In addition, the home appliance control server 230 may transmit an operation result received from the indoor unit 10 to the voice recognition system 200, and transmit a response signal including processing result information to the indoor unit 10.

The voice recognition system 200 may receive a signal including an output phrase text corresponding to the processing result information from the indoor unit 10, convert the received output phrase text into voice data, and transmit the converted voice data to the indoor unit 10. The response signal based on the determined voice command transmitted from the natural language processing server 212 to the indoor unit 10 may include processing result information.

The indoor unit 10 may receive a response signal based on the voice command determined from the natural language processing server 212. Here, the response signal may include text data of a response corresponding to the determined voice command.

For example, when the user inputs a voice command to change a set temperature of an air conditioner, the response signal may include text data indicating that the set temperature has been changed.

Meanwhile, the indoor unit 10 may transmit a signal including text corresponding to the received response signal to the text-to-speech conversion server 213. Here, the signal including the text corresponding to the response signal may include the output phrase text corresponding to the processing result information.

Meanwhile, the text-to-speech conversion server 213 may convert the text included in the received signal into voice data and transmit the converted voice data to the indoor unit 10. Here, the converted voice data may include a sound source file.

The indoor unit 10 may output a voice guidance message based on voice data received through the speaker.

Meanwhile, the natural language processing server 212 determines whether the voice command determined based on the state information of the indoor unit 10 can be supported by the indoor unit 10, and when the voice command can be supported, a request signal corresponding to the voice command determined by the home appliance control server 230 may be transmitted

In addition, when it is impossible to support the voice command determined based on the state information of the indoor unit 10, the natural language processing server 212 may transmit a signal indicating that the function is not supported. The signal indicating that the function is not supported may be included in a response signal based on the determined voice command transmitted by the natural language processing server 212.

The indoor unit 10 may request voice data from the text-to-speech conversion server 213 and output a voice guidance message indicating that the function is not supported in the current state.

Depending on the embodiment not part of the present invention, it may be determined whether the home appliance control server 230 can support the voice command.

The indoor unit control system can be used by organically connecting servers that play various roles for natural language speech processing.

The indoor unit 10 may perform reception and pre-processing of a voice command, and transmission to a server, and the voice recognition system 200 may perform natural language processing such as voice/text conversion, intention analysis, and command identification.

By performing natural language processing in the voice recognition system 200, the indoor unit 10 can reduce a load on CPU and memory of the internal embedded module.

The indoor unit 10 may receive voice data including a sound source file from the voice recognition system 200 and output a voice guidance message as audio, thereby responding to the user's voice input with auditory feedback.

The indoor unit 10 may receive a voice file from the voice recognition system 200 as streaming and reproduce and output a voice guidance message to the user. Accordingly, the indoor unit 10 does not need to store various sound source files.

The indoor unit control system secures compatibility and connectivity through a plurality of servers, and the final control command utilizes the home appliance control server 230. Accordingly, it is possible to prevent a conflict between the voice recognition process and the home appliance control using Wi-Fi communication through the home appliance control server 230 and conflict between the home appliance control through the portable terminal and the home appliance control by the voice input through the home appliance 300.

In addition, the indoor unit control system can reduce a load on a specific server depending on one server through an organic connection between the servers, each server has a different role, and thus, when a problem occurs on a specific server, it can be easily responded to by linking with other servers that play the same role.

In addition, a plurality of servers can be independently updated frequently, which is advantageous for performance improvement.

### <Full Utilization of Home Appliance Including Indoor Unit>

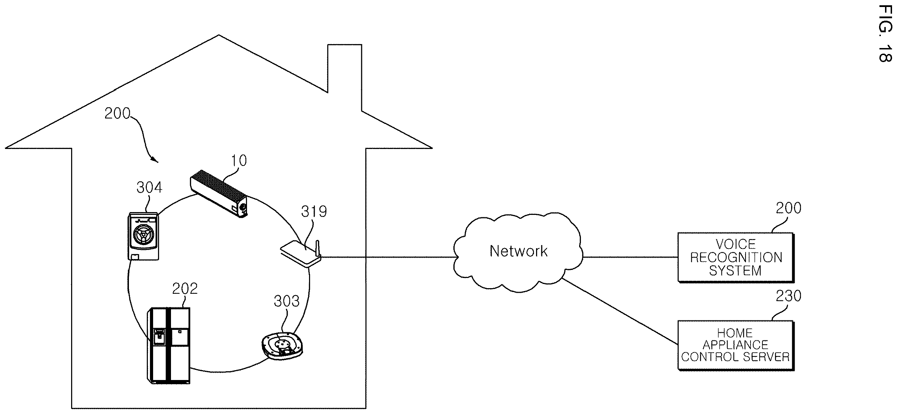

FIG. 18 is a diagram schematically illustrating an indoor unit control system according to one embodiment not part of the present invention.

Hereinafter, with reference to FIG. 18, a control system that can be utilized in all home appliances including the indoor unit 10 according to the present embodiment will be described.

Referring to FIG. 18, the indoor unit control system according to an embodiment not part of the present invention includes the home appliance 300 having a communication module to communicate with other devices or connect to a network, the voice recognition system 200 for recognizing and processing voice, and the home appliance control server 230 for controlling the home appliance according to the voice recognition result.

The home appliance 300 includes the indoor unit 10, a washing machine 304, a mobile robot 303, and a refrigerator 302, and may include a TV (not illustrated), a cooking appliance (not illustrated), and the like.

In addition, the home appliance may include a mobile terminal (not illustrated) such as a smart phone or a tablet PC.

The home appliance 300 includes a communication module and the devices are interconnected to form a network, and the home appliance network may be connected to an external network, for example, the Internet through a communication device 219. In addition, the home appliance 300 may be connected to a separate network for voice recognition and home appliance control.

The communication device 210 may be an access point (AP) that enables mutual data transmission and reception between home appliances and enables each home appliance to communicate with the voice recognition system 200 and the home appliance control server 230.

A communication method of the home appliance 300 may be a Wi-Fi communication method. Wi-Fi is only an example of a communication method.

In addition, the home appliance 300 may include different types of communication modules or a plurality of communication modules. For example, the home appliance may include an NFC module, a Zigbee communication module, a Bluetooth^{™} communication module, and the like.

The home appliance 300 can be connected to a server included in the voice recognition system 200, an external predetermined server, a user's mobile terminal, or the like through a Wi-Fi communication module or the like, and can support smart functions such as remote monitoring and remote control. The user may check information on the home appliance 300 or control the home appliance 300 through a portable terminal.

The home appliance 300 may receive a user's voice input, the voice recognition system 200 may recognize and analyze the user's voice input, and the home appliance control server 230 may control the home appliance 300.

Meanwhile, at least some of the servers included in the voice recognition system 200 may be a server operated by a manufacturing company or a sales company of home appliances, or a server operated by a company entrusted with a service by the manufacturing company or the sales company.

### <Control of Indoor Unit>

An air conditioner according to the present embodiment may further include a compressor (not illustrated) which compresses a refrigerant flowing through the indoor unit 10 and an outdoor unit (not illustrated) including an outdoor heat exchanger (not illustrated) which changes a refrigerant phase through outdoor air. The air conditioner according to the present embodiment may further include an outdoor unit temperature sensor (not illustrated) for measuring the temperature of the outdoor unit. The air conditioner according to the present embodiment may further include a time measurement unit (not illustrated) for measuring a driving time of the air conditioner.

The time measurement unit may measure a short-term continuous operation time of the air conditioner or measure a long-term cumulative operation time of the air conditioner.

The air conditioner according to the present embodiment may include a controller (not illustrated) for controlling the operation of the indoor unit or the operation of the configuration of the outdoor unit.

The controller may provide a notification to the user when the temperature value measured by the outdoor unit temperature sensor exceeds the set temperature value. The controller may provide a notification requesting ventilation of the space in which the outdoor unit is installed to the user through the speaker 180 of the voice recognition device 100.

The controller may provide a notification to the user when the accumulated operating time of the air conditioner measured by the time measurement unit exceeds the first set time. When an accumulated operating time of the air conditioner measured by the time measurement unit exceeds a set time, the controller may provide a notification about a filter replacement time to the user through the speaker 180 of the voice recognition device 100.

The controller may provide a notification to the user when the continuous operation time of the air conditioner measured by the time measurement unit exceeds a second set time. The controller may receive information on the external weather through the communication module, and provide a notification to the user when the fine dust, or contained in the outdoor air is below a certain level. When a continuous operation time of the air conditioner measured by the time measurement unit exceeds a second set time and the external weather provided through the communication module illustrates fine dust in the air below a certain level, the controller may provide notification to the user. In this case, the controller may provide a notification on ventilation of indoor air to the user through the speaker 180 of the voice recognition device 100.

Hereinbefore, preferred embodiments of the present invention are illustrated and described

## Claims

1. A voice recognition device (100) comprising:
a base cover (110) including a base surface (110a) and a peripheral surface (110b) extending upward in a height direction from an edge of the base surface (110a) and forming an opening portion at the other end portion of the peripheral surface (110b);
a top cover (160) covering the opening portion of the base cover (110), configured to couple with the base cover (110) to form an inner space, and including a communication hole (168a, 168b) allowing the inner space to communicate with an outside;
a voice input device (190) disposed in the inner space to receive a voice;
a speaker (180) disposed in the inner space to output a sound; and
a middle cover (130) fixedly disposed in the inner space to fix the voice input device (190) and the speaker (180),
wherein the middle cover (130) includes a cover surface (132) disposed in contact with an inner surface of the top cover (160), at least one voice guide portion (145a, 145b) connected to one side of the communication hole (168a, 168b) and including a voice guide groove (146a, 146b) recessed inward from the cover surface (132) to guide a voice generated at the outside and transmitted through the communication hole (168a, 168b) to the voice input device (190), and a speaker mounting portion (134, 136) forming a speaker installation space and communicating with an outside of the top cover (160) through the other side of the communication hole (168a, 168b),
the cover surface (132) disposed in contact with the inner surface of the top cover (160) is disposed between the speaker mounting portion (134, 136) and the at least one voice guide portion (145a, 145b), and
each of the at least one voice guide portion (145a, 145b) includes:
an inclined surface (1461a, 1461b) disposed to be inclined downward from the cover surface (132) so that the voice input device (190) is disposed inside the inclined surface (1461a, 1461b),
a voice guide groove-base (1462a, 1462b) bent an end portion of the inclined surface (1461a, 1461b) to extend along the communication hole (168a, 168b), and
a voice guide groove-side surface portion (1463a, 1463b, 1464a, 1464b) bent upward in the height direction from both end portions of the voice guide groove-base (1462a, 1462b) and extending to the cover surface (132).

2. The voice recognition device (100) of claim 1, wherein the at least one voice guide portion (145a, 145b), the cover surface (132), and the speaker mounting portion (134, 136) are sequentially disposed below the communication hole (168a, 168b).

3. The voice recognition device (100) of claim 1, wherein the top cover (160) includes
a first cover (162) having an elliptical shape and disposed at a center thereof,
a second cover (164) disposed at a predetermined distance from an outer periphery of the first cover (162) and fastened to the base cover (110), and
a connection member (166a, 166b) connecting the first cover (162) and the second cover (164) to each other, and
an elliptical ring-shaped communication is formed between the first cover (162) and the second cover (164) in the top cover (160).

4. The voice recognition device (100) of claim 1, wherein the communication hole (168a, 168b) includes
a pair of straight holes (170a, 170b) having the same length, spaced apart by a predetermined distance from each other, and formed side by side,
a first curved hole (172a) connecting one end portions of each of the pair of straight holes (170a, 170b) to each other to form a curved surface, and
a second curved hole (172b) connecting the other end portions of each of the pair of straight holes (170a, 170b) to form a curved surface.

5. The voice recognition device (100) of claim 4, wherein the at least one voice guide portion (145a, 145b) includes a pair of voice guide portions (145a, 145b) disposed below the pair of straight holes (170a, 170b), and
a voice guide groove (146a, 146b) formed in each of the pair of voice guide portions (145a, 145b) extends in a direction of the first curved hole (172a) along each of the pair of straight holes (170a, 170b).

6. The voice recognition device (100) of claim 5, wherein the speaker mounting portion (134, 136) is disposed at a position at which the second curved hole (172b) is formed.

7. The voice recognition device (100) of claim 1, wherein the top cover (160) has a shape protruding upward in the height direction from a center thereof, and the cover surface (132) has a curved surface shape corresponding to the top cover (160).

8. The voice recognition device (100) of claim 1, wherein the voice input device (190) is mounted on an inner surface of the inclined surface (1461a, 1461b), and
a voice input device communication hole (148a, 148b) allowing the voice guide groove (146a, 146b) and the voice input device (190) to communicate with each other is formed on the inclined surface (1461a, 1461b).

9. The voice recognition device (100) of claim 8, wherein the voice input device communication hole (148a, 148b) is open to form an inclination angle upward in the height direction and a direction toward which the inclined surface (1461a, 1461b) is directed.

10. The voice recognition device (100) of claim 8, wherein the voice input device communication hole (148a, 148b) is formed so that a size of the hole increases from the inner surface of the inclined surface (1461a, 1461b) toward an outer surface thereof.

11. The voice recognition device (100) of claim 1, wherein the speaker mounting portion (134, 136) includes
a first speaker mounting portion (134) forming a space on an outer side of the middle cover (130) so that a portion of the speaker is disposed, and
a second speaker mounting portion (136) forming a space on an inner side of the middle cover so that other portions of the speaker are disposed, wherein the first speaker mounting portion (134) includes a speaker mounting surface (134a) disposed apart downward in the height direction from the cover surface (132) and forming a flat surface so that a portion of the speaker is mounted, a speaker insertion guide surface connecting between the speaker mounting surface (134a) and the cover surface (132) and guiding insertion of the speaker, a speaker fixing rib (134e) formed to limit a movement of the speaker at an end portion of the speaker mounting surface (134a), and a speaker mounting hole (138) formed so that the speaker is inserted between the speaker mounting surface (134a) and the cover surface (132).

## Patentansprüche

1. Spracherkennungsvorrichtung (100), die Folgendes umfasst:
eine Basisabdeckung (100), die eine Grundfläche (110a) und eine Umfangsfläche (110b), die sich von einem Rand der Grundfläche (110a) in Höhenrichtung nach oben erstreckt und einen Öffnungsabschnitt an dem anderen Endabschnitt der Umfangsfläche (110b) bildet, enthält;
eine obere Abdeckung (160), die den Öffnungsabschnitt der Basisabdeckung (110) bedeckt, konfiguriert ist, an die Basisabdeckung (110) anzukoppeln, um einen inneren Raum zu bilden, und ein Kommunikationsloch (168a, 168b) enthält, das dem inneren Raum erlaubt, mit einer äußeren Umgebung zu kommunizieren;
eine Spracheingabevorrichtung (190), die in dem inneren Raum angeordnet ist, um Sprache zu empfangen;
einen Lautsprecher (180), der in dem inneren Raum angeordnet ist, um Schall auszugeben; und
eine mittlere Abdeckung (130), die in dem inneren Raum fest angeordnet ist, um die Spracheingabevorrichtung (190) und den Lautsprecher (180) zu befestigen,
wobei die mittlere Abdeckung (130) enthält: eine Abdeckungsfläche (132), die in Kontakt mit einer inneren Fläche der oberen Abdeckung (160) angeordnet ist, mindestens einen Sprachführungsabschnitt (145a, 145b), der mit einer Seite des Kommunikationslochs (168a, 168b) verbunden ist und eine Sprachführungsrille (146a, 146b), die von der Abdeckungsfläche (132) nach innen vertieft ist, aufweist, um Sprache, die an der Außenseite erzeugt wird und durch das Kommunikationsloch (168a, 168b) zu der Spracheingabevorrichtung (190) übertragen wird, zu lenken, und einen Lautsprecherbefestigungsabschnitt (134, 136), der einen Lautsprecherinstallationsraum bildet und mit einer äußeren Umgebung der oberen Abdeckung (160) durch die andere Seite des Kommunikationslochs (168a, 168b) kommuniziert,
wobei die Abdeckungsfläche (132), die in Kontakt mit der inneren Fläche der oberen Abdeckung (160) angeordnet ist, zwischen dem Lautsprecherbefestigungsabschnitt (134, 136) und dem mindestens einen Sprachführungsabschnitt (145a, 145b) angeordnet ist, und
jeder des mindestens einen Sprachführungsabschnitts (145a, 145b) enthält:
eine geneigte Fläche (1461a, 1461b), die so angeordnet ist, dass sie von der Abdeckungsfläche (132) nach unten geneigt ist, so dass die Spracheingabevorrichtung (190) innerhalb der geneigten Fläche (1461a, 1461b) angeordnet ist,
eine Sprachführungsrillenbasis (1462a, 1462b), die an einem Endpunkt der geneigten Fläche (1461a, 1461b) gebogen ist, um sich entlang des Kommunikationslochs (168a, 168b) zu erstrecken, und
einen Sprachführungsrillen-Seitenflächenabschnitt (1463a, 1463b, 1464a, 1464b), der von beiden Endabschnitten der Sprachführungsrillenbasis (1462a, 1462b) in Höhenrichtung gebogen ist und sich zu der Abdeckungsfläche (132) erstreckt.

2. Spracherkennungsvorrichtung (100) nach Anspruch 1, wobei der mindestens eine Sprachführungsabschnitt (145a, 145b), die Abdeckungsfläche (132) und der Lautsprecherbefestigungsabschnitt (134, 136) nacheinander unter dem Kommunikationsloch (168a, 168b) angeordnet sind.

3. Spracherkennungsvorrichtung (100) nach Anspruch 1, wobei die obere Abdeckung (160) enthält:
eine erste Abdeckung (162), die eine elliptische Form hat und an einem Mittelpunkt hiervon angeordnet ist,
eine zweite Abdeckung (164), die in einem vorgegebenen Abstand von einem äußeren Umfang der ersten Abdeckung (162) und an der Basisabdeckung (110) befestigt angeordnet ist, und
ein Verbindungselement (166a, 166b), das die erste Abdeckung (162) und die zweite Abdeckung (164) miteinander verbindet, und
eine elliptische ringförmige Kommunikation zwischen der ersten Abdeckung (162) und der zweiten Abdeckung (164) in der oberen Abdeckung gebildet wird.

4. Spracherkennungsvorrichtung (100) nach Anspruch 1, wobei das Kommunikationsloch (168a, 168b) enthält:
ein Paar gerade Löcher (170a, 170b) mit derselben Länge, die um einen vorgegebenen Abstand voneinander beabstandet sind und Seite an Seite gebildet sind,
ein erstes gekrümmtes Loch (172a), das die einen Endabschnitte jedes des Paars gerader Löcher (170a, 170b) miteinander verbindet, um eine gekrümmte Fläche zu bilden, und
ein zweites gekrümmtes Loch (172b), das die anderen Endabschnitte jedes des Paars gerader Löcher (170a, 170) miteinander verbindet, um eine gekrümmte Fläche zu bilden.

5. Spracherkennungsvorrichtung (100) nach Anspruch 4, wobei der mindestens eine Sprachführungsabschnitt (145a, 145b) ein Paar Sprachführungsabschnitte (145a, 145b) umfasst, die unter dem Paar gerader Löcher (170a, 170b) angeordnet sind, und
eine Sprachführungsrille (146a, 146b), die in jedem des Paars von Sprachführungsabschnitten (145a, 145b) gebildet ist, sich in Richtung des ersten gekrümmten Lochs (172a) entlang jedes des Paars gerader Löcher (170a, 170b) erstreckt.

6. Spracherkennungsvorrichtung (100) nach Anspruch 5, wobei der Lautsprecherbefestigungsabschnitt (134, 136) an einer Position angeordnet ist, an der das zweite gekrümmte Loch (172b) gebildet ist.

7. Spracherkennungsvorrichtung (100) nach Anspruch 1, wobei die obere Abdeckung (160) eine Form hat, die in Höhenrichtung von einem Mittelpunkt hiervon nach oben vorsteht, und die Abdeckungsfläche (132) die Form einer gekrümmten Fläche besitzt, die der oberen Abdeckung (160) entspricht.

8. Spracherkennungsvorrichtung (100) nach Anspruch 1, wobei die Spracheingabevorrichtung (190) auf einer inneren Fläche der geneigten Fläche (1461a, 1461b) befestigt ist und
ein Spracheingabevorrichtungs-Kommunikationsloch (148a, 148b), das der Sprachführungsrille (146a, 146b) und der Spracheingabevorrichtung (190) erlaubt, miteinander zu kommunizieren, auf der geneigten Fläche (1461a, 1461b) gebildet ist.

9. Spracherkennungsvorrichtung (100) nach Anspruch 8, wobei das Spracheingabevorrichtungs-Kommunikationsloch (148a, 148b) offen ist, um einen Neigungswinkel nach oben in Höhenrichtung und in einer Richtung, in der die geneigte Fläche (1461a, 1461b) orientiert ist, zu bilden.

10. Spracherkennungsvorrichtung (100) nach Anspruch 8, wobei das Spracheingabevorrichtungs-Kommunikationsloch (148a, 148b) so gebildet ist, dass eine Größe des Lochs von der inneren Fläche der geneigten Fläche (1461a, 1461b) in Richtung einer äußeren Fläche hiervon zunimmt.

11. Spracherkennungsvorrichtung (100) nach Anspruch 1, wobei der Lautsprecherbefestigungsabschnitt (134, 136) umfasst:
einen ersten Lautsprecherbefestigungsabschnitt (134), der einen Raum auf einer äußeren Seite der mittleren Abdeckung (130) bildet, so dass ein Teil des Lautsprechers angeordnet ist, und
einen zweiten Lautsprecherbefestigungsabschnitt (136), der einen Raum auf einer inneren Seite der mittleren Abdeckung bildet, so dass andere Teile des Lautsprechers angeordnet sind, wobei der erste Lautsprecherbefestigungsabschnitt (134) eine Lautsprecherbefestigungsfläche (134a), die in Höhenrichtung von der Abdeckungsfläche (132) nach unten getrennt angeordnet ist und eine flache Fläche bildet, so dass ein Teil des Lautsprechers befestigt ist, eine Lautsprechereinführführungsfläche, die zwischen der Lautsprecherbefestigungsfläche (134a) und der Abdeckungsfläche (132) verbindet und ein Einführen des Lautsprecher lenkt, eine Lautsprecherbefestigungsrippe (134e), die so gebildet ist, dass sie eine Bewegung des Lautsprechers bei einem Endabschnitt der Lautsprecherbefestigungsfläche (134a) begrenzt, und ein Lautsprecherbefestigungsloch (138), das so gebildet ist, dass der Lautsprecher zwischen die Lautsprecherbefestigungsfläche (134a) und die Abdeckungsfläche (132) eingeführt wird, aufweist.

## Revendications

1. Dispositif de reconnaissance vocale (100) comportant :
un couvercle de base (110) incluant une surface de base (110a) et une surface périphérique (110b) s'étendant vers le haut dans une direction de hauteur à partir d'un bord de la surface de base (110a) et formant une partie d'ouverture sur l'autre partie d'extrémité de la surface périphérique (110b) ;
un couvercle supérieur (160) recouvrant la partie d'ouverture du couvercle de base (110), configuré pour être couplé au couvercle de base (110) pour former un espace intérieur, et incluant un trou de communication (168a, 168b) permettant à l'espace intérieur de communiquer avec un extérieur ;
un dispositif d'entrée vocale (190) disposé dans l'espace intérieur pour recevoir une voix ;
un haut-parleur (180) disposé dans l'espace intérieur pour émettre un son ; et
un couvercle central (130) disposé de manière fixe dans l'espace intérieur pour fixer le dispositif d'entrée vocale (190) et le haut-parleur (180),
dans lequel le couvercle central (130) inclut une surface de couvercle (132) disposée en contact avec une surface intérieure du couvercle supérieur (160), au moins une partie de guidage vocal (145a, 145b) reliée à un côté du trou de communication (168a, 168b) et incluant une rainure de guidage vocal (146a, 146b) évidée vers l'intérieur à partir de la surface de couvercle (132) pour guider une voix générée à l'extérieur et transmise à travers le trou de communication (168a, 168b) vers le dispositif d'entrée vocale (190), et une partie de montage de haut-parleur (134, 136) formant un espace d'installation de haut-parleur et communiquant avec un extérieur du couvercle supérieur (160) par l'autre côté du trou de communication (168a, 168b),
la surface de couvercle (132) disposée en contact avec la surface intérieure du couvercle supérieur (160) est disposée entre la partie de montage de haut-parleur (134, 136) et la au moins une partie de guidage vocal (145a, 145b), et
chacune des au moins une partie de guidage vocal (145a, 145b) inclut :
une surface inclinée (1461a, 1461b) disposée de manière à être inclinée vers le bas à partir de la surface de couvercle (132) de sorte que le dispositif d'entrée vocale (190) est disposé à l'intérieur de la surface inclinée (1461a, 1461b),
une base de rainure de guide vocal (1462a, 1462b) pliée sur une partie d'extrémité de la surface inclinée (1461a, 1461b) pour s'étendre le long du trou de communication (168a, 168b), et
une partie de surface côté rainure de guide vocal (1463a, 1463b, 1464a, 1464b) pliée vers le haut dans la direction de hauteur à partir des deux parties d'extrémité de la base de rainure de guide vocal (1462a, 1462b) et s'étendant jusqu'à la surface de couvercle (132).

2. Dispositif de reconnaissance vocale (100) selon la revendication 1, dans lequel la au moins une partie de guidage vocal (145a, 145b), la surface de couvercle (132) et la partie de montage de haut-parleur (134, 136) sont disposées séquentiellement sous le trou de communication (168a, 168b).

3. Dispositif de reconnaissance vocale (100) selon la revendication 1, dans lequel le couvercle supérieur (160) inclut
un premier couvercle (162) ayant une forme elliptique et disposé au centre de celui-ci,
un second couvercle (164) disposé à une distance prédéterminée d'une périphérie extérieure du premier couvercle (162) et fixé au couvercle de base (110), et
un élément de liaison (166a, 166b) reliant le premier couvercle (162) et le second couvercle (164) l'un à l'autre, et
une communication annulaire elliptique est formée entre le premier couvercle (162) et le second couvercle (164) dans le couvercle supérieur (160).

4. Dispositif de reconnaissance vocale (100) selon la revendication 1, dans lequel le trou de communication (168a, 168b) inclut :
une paire de trous droits (170a, 170b) ayant la même longueur, espacés d'une distance prédéterminée l'un de l'autre, et formés côte à côte,
un premier trou incurvé (172a) reliant des premières parties d'extrémité de chacun des deux trous droits (170a, 170b) l'un à l'autre pour former une surface courbe, et
un second trou incurvé (172b) reliant les secondes parties d'extrémité de chacun des deux trous droits (170a, 170b) pour former une surface courbe.

5. Dispositif de reconnaissance vocale (100) selon la revendication 4, dans lequel la au moins une partie de guidage vocal (145a, 145b) inclut deux parties de guidage vocal (145a, 145b) disposées sous la paire de trous droits (170a, 170b), et
une rainure de guidage vocal (146a, 146b) formée dans chacune des deux parties de guidage vocal (145a, 145b) s'étend dans une direction du premier trou incurvé (172a) le long de chacun des deux trous droits (170a, 170b).

6. Dispositif de reconnaissance vocale (100) selon la revendication 5, dans lequel la partie de montage de haut-parleur (134, 136) est disposée à une position à laquelle le second trou incurvé (172b) est formé.

7. Dispositif de reconnaissance vocale (100) selon la revendication 1, dans lequel le couvercle supérieur (160) a une forme faisant saillie vers le haut dans la direction de hauteur à partir d'un centre de celui-ci, et la surface de couvercle (132) a une forme de surface courbe correspondant au couvercle supérieur (160).

8. Dispositif de reconnaissance vocale (100) selon la revendication 1, dans lequel le dispositif d'entrée vocale (190) est monté sur une surface intérieure de la surface inclinée (1461a, 1461b), et
un trou de communication de dispositif d'entrée vocale (148a, 148b) permettant à la rainure de guidage vocal (146a, 146b) et au dispositif d'entrée vocale (190) de communiquer l'un avec l'autre est formé sur la surface inclinée (1461a, 1461b).

9. Dispositif de reconnaissance vocale (100) selon la revendication 8, dans lequel le trou de communication de dispositif d'entrée vocale (148a, 148b) est ouvert pour former un angle d'inclinaison vers le haut dans la direction de hauteur et une direction vers laquelle la surface inclinée (1461a, 1461b) est dirigée.

10. Dispositif de reconnaissance vocale (100) selon la revendication 8, dans lequel le trou de communication de dispositif d'entrée vocale (148a, 148b) est formé de sorte qu'une taille du trou augmente depuis la surface intérieure de la surface inclinée (1461a, 1461b) vers une surface extérieure de celle-ci.

11. Dispositif de reconnaissance vocale (100) selon la revendication 1, dans lequel la partie de montage de haut-parleur (134, 136) inclut
une première partie de montage de haut-parleur (134) formant un espace sur un côté extérieur du couvercle central (130) de sorte qu'une partie du haut-parleur est disposée, et
une seconde partie de montage de haut-parleur (136) formant un espace sur un côté intérieur du couvercle central de sorte que d'autres parties du haut-parleur sont disposées, dans lequel la première partie de montage de haut-parleur (134) inclut une surface de montage de haut-parleur (134a) disposée espacée vers le bas dans la direction de hauteur de la surface de couvercle (132) et formant une surface plane de sorte qu'une partie du haut-parleur est montée, une surface de guidage d'insertion de haut-parleur établissant une liaison entre la surface de montage de haut-parleur (134a) et la surface de couvercle (132) et guidant l'insertion du haut-parleur, une nervure de fixation de haut-parleur (134e) formée pour limiter un mouvement du haut-parleur sur une partie d'extrémité de la surface de montage de haut-parleur (134a), et un trou de montage de haut-parleur (138) formé de sorte que le haut-parleur est inséré entre la surface de montage de haut-parleur (134a) et la surface de couvercle (132).
